Europäisches Patentamt

European Patent Office

Office européen des brevets

(19)

(11) Veröffentlichungsnummer: **0 208 648 B1**

(12) **EUROPÄISCHE PATENTSCHRIFT**

(45) Veröffentlichungstag der Patentschrift: **23.10.91**

(51) Int. Cl.[5]: **H04M 3/22**, H04Q 3/545

(21) Anmeldenummer: **86730101.2**

(22) Anmeldetag: **02.07.86**

(54) **Verfahren zur automatischen Prüfung von zentralgesteuerten Kommunikationssystemen, insbesondere von Nebenstellenanlagen.**

(30) Priorität: **08.07.85 DE 3524679**

(43) Veröffentlichungstag der Anmeldung:
**14.01.87 Patentblatt 87/03**

(45) Bekanntmachung des Hinweises auf die
Patenterteilung:
**23.10.91 Patentblatt 91/43**

(84) Benannte Vertragsstaaten:
**AT BE CH DE FR GB IT LI NL SE**

(56) Entgegenhaltungen:
**DE-A- 2 733 027**
**DE-C- 3 215 672**

**BRITISH TELECOMMUNICATIONS- ENGINEE-
RING, Band 3, Nr. 4, Januar 1985, Seiten
277-284, London, GB; R.M. BATY et al.:
"System X: Maintenance control subsystem"**

(73) Patentinhaber: **SIEMENS AKTIENGESELL-
SCHAFT**
**Wittelsbacherplatz 2**
**W-8000 München 2(DE)**

(72) Erfinder: **Loschan, Horst, Dipl.-Ing.**
**Scharnhorststrasse 4**
**W-8000 München 50(DE)**

Rank Xerox (UK) Business Services

## Beschreibung

Die Erfindung betrifft ein Verfahren zur automatischen Prüfung von zentralgesteuerten Kommunikationssystemen, insbesondere von Nebenstellenanlagen, wobei die Kommunikationssysteme mindestens einen Vermittlungsrechner mit entsprechendem Speicheranteil aufweisen, der Speicher hinsichtlich der Aufnahme von Programminformationen und Steuerdateninformationen funktionsbezogen unterteilt ist und die Steuerung von hierarchisch durch ihren Datenumfang voneinander abhängigen Funktionseinheiten durch eine die Programm- und Steuerdateninformationen enthaltene Prüfablauffolge realisiert ist.

Ein derartiges Verfahren ist beispielsweise aus der DE-PS 32 15 672 bekannt, bei dem die Nebenstellenanlage mittels einer rechnergesteuerten Anlagenprüfeinrichtung auf ihre Funktion hin geprüft wird. Die Anlagenprüfeinrichtung weist dazu einen Speicher auf, der zur Aufnahme der Programminformationen und der Steuerdateninformationen entsprechend unterteilt und die Prüfung selbst in Funktionskomplexe gegliedert ist. Ein Funktionskomplex bezieht sich dabei jeweils auf entprechende Einrichtungen der Nebenstellenanlage, für die die Anlagenprüfeinrichtung die zur Prüfung notwendigen Nachbildungseinrichtungen vorsieht. Eine weitere Untergliederung der Funktionskomplexe in sogenannte Funktionskomplexvarianten werden ebenfalls durch die Nachbildungseinrichtungen der Anlagenprüfeinrichtung realisiert. Um Nebenstellenanlagen unterschiedlicher Größenordnungen mit unterschiedlichen Anlagenausbau und/oder unterschiedlichen Funktionsmöglichkeiten prüfen zu können, ist es erforderlich, die Prüfprogramme diesen unterschiedlichen Gegebenheiten anzupassen.

Die der Erfindung zugrunde liegende Aufgabe besteht darin, ein Verfahren anzugeben, mit dem die eingangs definierten Kommunikationssysteme mit sehr viel geringeren Aufwand ohne den Einsatz von zusätzlichen und hinsichtlich der vielfältigen Nachbildungseinrichtungen aufwendigen Anlagenprüfeinrichtungen zu prüfen sind, ohne die Prüftiefe, insbesondere die hardwaremäßige Prüfung der einzelnen Funktionseinheiten, zu vermindern. Erfindungsgemäß wird dies durch die Kombination der Merkmale 1.1 bis 1.4 erreicht.

Mit der Prüfablauffolge, bei der ausgehend von einer bestimmten Anzahl von Parametern ein Grundentscheidungselement gebildet wird, dem zunächst ein oder mehrere weitere Parameter zugeordnet werden, die dann ein oder mehrere, voneinander unabhängige erste Entscheidungselemente darstellen, denen in weiterer Folge weitere Parameter hinzugefügt werden, die dann ebenfalls voneinander unabhängige zweite und gegebenenfalls weitere Entscheidungselemente bilden, ist erreicht, daß in dieser Weise Kommunikationssysteme mit unterschiedlisten Ausbaustufen und Funktionsvarianten ohne den Einsatz zusätzlicher Anlagenprüfeinrichtungen geprüft werden können. Als wesentlich für die Erfindung ist anzusehen, daß mit einer derartig geregelten Prüfablauffolge, die stets beginnend mit dem Grundentscheidungselement, sequentiell von dem jeweils ersten Entscheidungselement zu den jeweils zweiten und gegebenenfalls weiteren Entscheidungselementen weitergeschaltet und für jede Art von Entscheidungselement ein "Soll-Ist-Wertevergleich" der Steuerdaten mit den tatsächlich vorhandenen Daten veranlaßt wird, dem dann je nach Ergebnis eine selbsttätige Weiterschaltung zu einem nächst untergeordneten Entscheidungselement zur Durchführung eines Prüfprogrammes oder die Rückverweisung zu einem nächst übergeordneten Entscheidungselement folgt, das Kommunikationssystem sich selbst prüfen kann. Sobald ein Entscheidungselement nicht die Voraussetzungen - also den Soll-Zustand - erreicht, wird zu dem übergeordneten Entscheidungselement zurückgeschaltet und von dort aus die weitere Prüfung des Systems veranlaßt. Daraus ergibt sich in vorteilhafter Weise, daß die Prüfprogramme, deren Voraussetzungen durch die Parameter nicht erfüllt sind, erst gar nicht zur Prüfung aufgerufen werden. Durch eine entsprechende Aufgliederung der anlagenstrukturbedingten Funktionsfolgen können damit sowohl unterschiedliche Ausbaustufen als auch jede Art von Funktionsvarianten mit erfaßt werden. Da mit dem Ablauf des Prüfprogrammes stets zur Bezugsgrundlage des jeweils nächst übergeordneten Entscheidungselementes zurückgeführt wird, kann die Prüfablauffolge jeder Zeit durch hinzufügen neuer Prüfaufträge beim Hinzukommen neuer Funktionseinheiten völlig variabel gestaltet werden.

Eine vorteilhafte Ausgestaltung der Erfindung sieht vor, daß jedes Entscheidungselement durch ein oder mehrere Funktionseinheiten repräsentiert wird und diese Funktionseinheiten integraler Bestandteil des Kommunikationssystems sind, das durch den im System vorhandenen Vermittlungsrechner zentral gesteuert ist. Zur Durchführung der Prüfung werden somit keine zusätzlichen Anlagenprüfeinrichtungen benötigt, da der Prüfvorgang selbst stets mit den in den entsprechenden Kommunikationssystemen vorhandenen Funktionseinheiten durchgeführt werden kann.

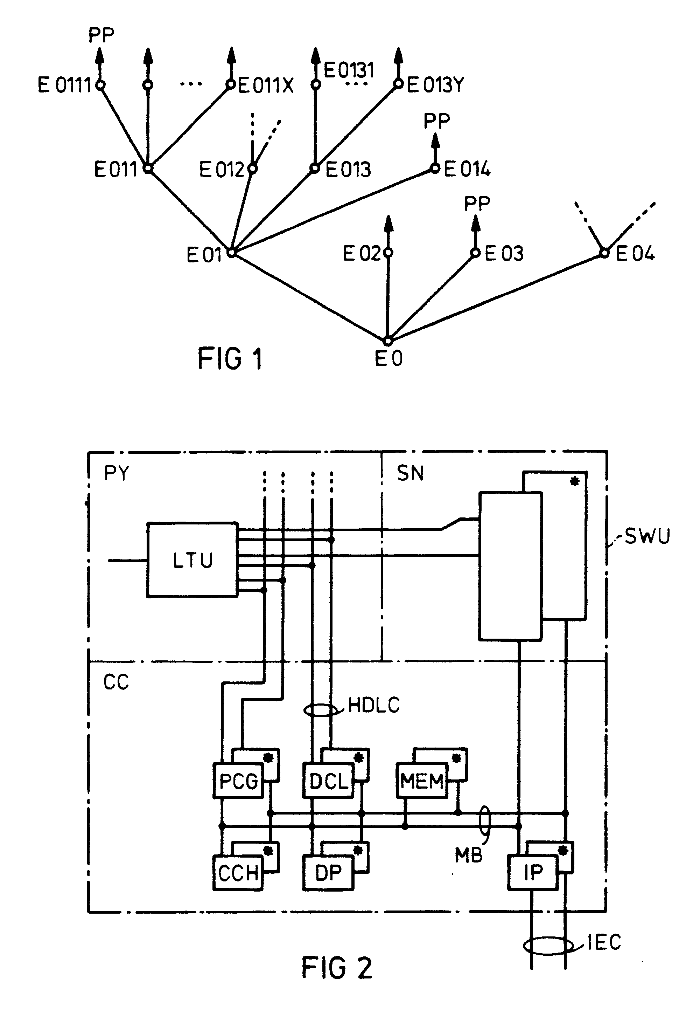

Das erfindungsgemäße Verfahren wird in einem figürlich dargestellten Ausführungsbeispiel näher erläutert, wobei in der Figur 1 die sequentiell gegliederte Prüfablauffolge schematisch dargestellt ist und die Figur 2 auszugsweise die Struktur eines zentralgesteuerten Kommunikationssystems zeigt.

Die Figur 1 läßt die Prüfablauffolge erkennen, bei der stets von dem Grundentscheidungselement E0 ausgegangen wird. Dieses Grundentscheidungselement E0 stellt die Steuerdaten dar, die als bestimmte Kennmerkmale des Kommunikationssystems bestimmten Parametern entsprechen. Das Prüfverfahren wird in der Weise weitergeführt, das dem Grundentscheidungselement E0 ein oder mehrere zusätzliche Parameter hinzugefügt werden, und somit die ersten Entscheidungselemente E01... , E04... erreicht werden, die jeweils für sich allein eigene voneinander unabhängige Entscheidungselemente bilden. Sofern die Parameter zum Aufruf eines Prüfprogrammes PP dieser ersten Entscheidungselemente E01... , E04... nicht vollständig sind, wird mit dem weiteren Hinzufügen ein oder mehrerer Parameter die zweite Ebene erreicht, in der die zweiten Entscheidungselemente E011 bis E014 vorgesehen sind. Diese Verfahrensweise wird schrittweise weitergeführt, bis schließlich von jedem einzelnen Entscheidungselement - in diesem Fall von den weiteren Entscheidungselementen E0111... E011X, E0131..., E013Y - das entsprechende Prüfprogramm PP mit den zum Prüfablauf notwendigen Parametern vorliegt.

Um den eigentlichen Verfahrensablauf näher zu verdeutlichen, wird von dem ersten Entscheidungselement E01 ausgegangen, dessen Steuerdateninformation einer ganz bestimmten Anlagenkonfiguration entspricht. Durch den "Soll-Ist-Wertevergleich" wird festgestellt, ob diese Steuerdateninformationen des ersten Entscheidungselements E01 mit den tatsächlichen in dem Kommunikationssystem vorhandenen Daten übereinstimmt. Ist dies der Fall, so wird durch das "Verweiskriterium" zu dem nächst untergeordneten Entscheidungselement - dem weiteren Entscheidungselement E011 weitergeschaltet. Sofern allerdings die vorhandenen Parameter ausreichen, um ein Prüfprogramm aufzurufen, was in diesem Beispiel nicht der Fall ist, entspricht dieses "Tätigkeitskriterium" diesem Programmaufruf. Von dem weiteren Entscheidungselement E011 werden in gleicher Weise durch Hinzufügen von Parametern die weiteren Entscheidungselemente bei Datenübereinstimmung angesteuert, und mit dem Abarbeiten der entsprechend aufgerufenen Prüfprogramme PP jeweils die Rückschaltung zum nächst übergeordneten Entscheidungselement, also zum zweiten Entscheidungselement E011, bewirkt. Sind beispielsweise sämtliche Prüfprogramme PP der weiteren Entscheidungselemente E0111 bis E011X abgearbeitet, so wird vom zweiten Entscheidungselement E011 zusätzlich ein "Endebefehl" gegeben und zum nächst übergeordneten Entscheidungselement, dem ersten Entscheidungselement E01, zurückgeschaltet.

Stimmten die Daten des ersten Entscheidungselementes E01 nicht mit den entsprechenden Daten des Kommunikationssystems überein, so wird durch das "Abbruchkriterium" der weitere Durchlauf der eben beschriebenen Prüfablauffolge unterbrochen und zum nächst übergeordneten Entscheidungselement - in diesem Falle zum Grundentscheidnungselement E0 zurückgeschaltet.

Das "Abbruchkriterium" kann beispielsweise dann gegeben sein, wenn das erste Entscheidungselement E01 die Steuerdateninformationen für den Ist-Wert des Anlagentyps darstellen, und diese Steuerdateninformationen nicht mit dem Anlagentyp übereinstimmen, in dem das Programm gerade abläuft. Das gleiche Ergebnis wird erreicht, wenn das entsprechende Entscheidungselement im Bereich der Funktionsabläufe einer im Duplex-Betrieb befindlichen Prüffolge liegt, daß zu prüfende Kommunikationssystem aber im Simplex-Betrieb ausgeführt ist. Wenn jedoch kein "Abbruchkriterium" erfolgt, wird - wie bereits beschrieben -die im "Tätigkeitskriterium" angegebenen Aufgabe ausgeführt. Die Ausführung der Aufgabe kann darin bestehen, daß der weitere Prüfablauf mit "Verzweigen" fortgesetzt wird, d. h., daß von dem ersten Entscheidungselement E01 beispielsweise zum zweiten Entscheidungselement E014 weitergeschaltet wird. Die auszuführende Aufgabe kann auch darin bestehen, daß weitere Parameter regeneriert werden müssen, um für ein nachfolgendes Prüfprogramm die notwendigen Voraussetzungen zu schaffen. Auch das mehrfache Durchlaufen von Schleifen, die durch den Systemaufbau bestimmt sind, kann im "Tätigkeitskriterium" enthalten sein.

Die Figur 2 zeigt das zentralgesteuerte Kommunikationssystem mit seinem Duchschalteteil SWU, dessen einzelne Bestandteile, wie die Peripherie PY, das Schaltnertzwerk SN und der zentrale Vermittlungsrechner CC, auszugsweise dargesstellt sind. Im einzelnen enthält der zentrale Vermittlungsrechner CC den zentralen Takgenerator PCG, die Schnittstelleneinrichtung DCL, die Speichereinrichtung MEM und Bussteuereinrichtung CCH, deren Funktionsweise im einzelnen bekannt und für die erfindungsgemäße Prüfablauffolge von untergeordneter Bedeutung sind. Sämtliche vorgenannten Einrichtungen sind über den Multibus MB miteinander verbunden und werden durch den Datenprozessor DP sowie den Schnittstellenprozessor IP gesteuert. Weiterhin ist mit dem Sternchen innerhalb der einzelnen Funktionseinrichtungen angedeutet, daß diese nur dann vorhanden sind, wenn das Kommunikationssystem im sogenannten Duplex-Betrieb arbeitet. Sofern das Kommunikationssystem lediglich einen einzigen Multibus MB besitztalso im Simplex-Betrib arbeitet - entfallen diese gedoppelten Funktionseinheiten. Des weiteren sind lediglich zur Vervollständigung die HDLC-Schnittstekke für die peripheren Leitungsanschlüsse LTU sowie die IEC-Schnittstelle zum Anschluß der Service-Module dargestellt.

Im Zusammenhang mit den in der Figur 1 dargestellten Entscheidungselementen ergibt sich folgende Beziehunng: das gesamte Durchschalteteil SWU wird durch das Grundentscheidungselement E0 repräsnetiert. Durch Hinzufügen weiter Parameter entstehen die ersten, voneinander unabhängigen Entscheidungselemente E01 bis E04, wobei für das erste Entscheidungselement E01 als Funktionseinheit der zentrale Vermittlungsrecher CC, für das Entscheidungselement E02 und E03, das Schaltnetzwerk SN und für das Entscheidungselement E04, welches nicht weiter verzweigt ist, Funktioneiheiten der Peripherie PY datemäßig festliegen. Durch zusätzliche Aufnahme weiterer Parameter zum ersten Entscheidungselemnt E01 werden in gleicher Weise die zweiten Entscheidungselement E011 bis E014 gebildet, die funktionell ebenfalls voneinander unabhängig sind. Entsprechend der Anlagenstruktur kann nunmehr das zweite Entscheidungselement E011 die Fruktionseinheit Multibus MB bilden, von dem aus durch Hinzufügen weiterer Parameter bzw. Daten die weiteren Entscheidungselemente E0111 bis E011X erreicht werden. Diese weiteren Entscheidungselemente E0111 bis E011X werden von den Funktionseinheiten repräsentiert, die an dem Multibus MB angeschlossen sind. So kann beispielsweise das weitere Entscheidungselement E0111 den zentralen Taktgenrator PCG darstellen und die Speichereinrichtung MEM durch das weitere Entscheidungselment E011X gebildet sein.Die weiteren Verzweigungen innerhalb eines deratigen Prüfablaufvorganges sind abhängig von der Anlagenstruktur und den Gegebenheiten des zu prüfenden Kommunikationssystems.

Soll beispielsweise innerhalb des Kommunikationssystem der Multubus MB geprüft werden, so beginnt die Prüfablauffolge beim Grundentscheidungselement E0, in dem bereits durch den Soll-Ist-Wertevergleich festgestellt wird, ob das Weiterführen des Prüfvorganges sinnvoll ist oder nicht. Besteht bei diesem Grundentscheidungselement E0 Datengleichheit mit dem zu prüfenden Kommunikationssystem, so wird durch das "Verweiskriterium" zum nächst untergeordnet Entscheidungselements, dem ersten Entscheidungselement E01, weitergeschaltet. Der Prüfvorgang setzt sich gleicher Weise fort, und erreicht bei entspechender Datenübereinstimmung das zweite Entscheidungselement E011, das die Frunktionseinheit Multibus MB darstellt. Von dem zweiten Entscheidungselement E011 wird weiterhin sequenziell jedes weiter Entscheidungselement angesteuert und das entsprechende Prüfprogramm PP aufgerufen. Mit Beendigung des Prüfprogrammes PP wird zur jewwiligen Bezugsgrundlage des nächst übergeordneten Entscheidungselementes - also zu zweiten Entscheidungselement E011, das den Multibus MB repräsentiert, zurückgeschaltet.

In der gleichen Weise werden sämtliche anderen Entscheidungselemente angesteuert und somit das gesamte Kommunikationssystem sequenziell durchgeprüft. Die für gut befundenen Prüfabläufe und gegebenenfalls Fehlermeldunge werden in bekannter Weise aufgezeichnet und leigen als Prüfprotokoll vor.

## Patentansprüche

1. Verfahren zur automatischen Prüfung von zentralgesteuerten Kommunikationssystemen, insbesondere von Nebenstellenanlagen, wobei die Kommunikationssysteme mindestens einen Vermittlungsrechner mit entsprechendem Speicheranteil aufweisen, der Speicher hinsichtlich der Aufnahme von Programminformationen und Steuerdateninformationen funktionsbezogen unterteilt ist und die Steuerung von hierarchisch durch ihren Datenumfang voneinander abhängigen Funktionseinheiten durch eine die Programm- und Steuerdateninformationen enthaltene Prüfablauffolge realisiert ist, **gekennzeichnet durch** die Kombination der Merkmale

   1.1 die Prüfablauffolge ist in der Weise geregelt, daß ausgehend von einer bestimmten Anzahl von durch Steuerdaten repräsentierten Parametern ein Grundentscheidungselement (E0) gebildet ist, dem zunächst durch Hinzufügen jeweils eines oder mehrer zusätzlicher Parameter ein oder mehre, voneinander unabhängige erste Entscheidungselemente (E01... E04) nachgeordnet werden und daß in weiterer Folge jedem ersten Entscheidungselement (E01... E04) solange ein oder mehrere weitere Parameter zur Bildung von ebenfalls voneinander unabhängigen, zweiten und gegebenenfalls weiteren Entscheidungselementen (E011 ... E014, und gegebenenfalls E0111... E011X, E0131... E013Y) hinzugefügt werden, bis von einem einzelnen Entscheidungselement, beispielsweise von dem weiteren Entscheidungselement (E0111), sämtliche zum Ablauf eines Prüfprogramms (PP) erforderlichen Parameter ein oder mehrer hierarchisch übergeordneter, ebenfalls durch die Steuerdaten gebildeter Entscheidungselemente (E011, E01, E0) vorliegen,

   1.2 die Prüfablauffolge beginnt mit dem Grundentscheidungselement (E0) und wird sequentiell von dem jeweils ersten Entscheidungselement (E01... E04) aus zu den jeweils zweiten und gegebenenfalls weiteren Entscheidungselementen (E011... E014 und gegebenenfalls E0111... E011X; E0131...

E013Y) weitergeschaltet,

1.3 für jede Art von Entscheidungselement (E0; E01...; E011...; E0111...) wird ein "Soll-Ist-Wertevergleich" der Steuerdaten mit tatsächlich vorhandenen Daten veranlaßt mit dem Ergebnis,

a) bei Nichtübereinstimmung durch ein "Abbruchkriterium" den Durchlauf der Prüfablauffolge zu unterbrechen und, beispielsweise ausgehend von dem zweiten Entscheidungselement (E011), zum nächst übergeordneten Entscheidungselement, also zum ersten Entscheidungselement (E01) zurückzuführen, bzw.

b) bei Übereinstimmung durch ein "Tätigkeitskriterium" - z. B. Aufruf eines Prüfprogramms (PP) - die entsprechende Funktion auszuführen oder durch ein "Verweiskriterium" zu einem nächst untergeordneten Entscheidungselemt, also zu einem der weiteren Entscheidungselemente (E0111..., E011X) weiter zu führen, bzw. mit einem zusätzlichen "Endebefehl" zum nächst übergeordneten Entscheidungselement, dem ersten Entscheidungselement (E01), zurückzuführen,

1.4 Mit dem Ablauf des Prüfprogrammes (PP) wird - beispielsweise ausgehend vom weiteren Entscheidungselement (E0111) - zur Bezugsgrundlage des jeweils nächst übergeordneten Entscheidungselementes - also zum zweiten Entscheidungselement (E011) - zurückgeführt.

2. Verfahren nach Anspruch 1 **gekennzeichnet durch** die Merkmale

2.1 jedes Entscheidungselement (E0, E01..., E011..., E0111...) ist durch ein oder mehrere Funktionseinheiten (PCG, PCL, MEM, IP, MB oder CC, SWU) repräsentiert,

2.2 die Funktionseinheiten (PCG, PCL, MEM, IP, MB oder CC, SWU) sind integraler Bestandteil des Kommunikations-systems, das durch den Vermittelungsrechner (DP) zentral gesteuert ist.

## Claims

1. Method for automatically testing centrally controlled communication systems, preferably private branch exchanges, in which the communication systems have at least one switching computer with corresponding memory part, the memory is divided in a function-related manner with respect to the storage of program information and control data information, and the control is realised by function units which are hierarchically dependent on one another by virtue of their data extent by means of a test execution sequence containing the program and control data information, characterised by the combination of features:

1.1 the test execution sequence is regulated in such a way that, starting from a given number of parameters represented by control data, a basic decision element (E0) is formed, which is followed, first of all by adding in each case one or more additional parameters, by one or more, mutually independent first decision elements (E01... E04) and in that, in further sequence, one or more further parameters for forming likewise mutually independent second, and possibly further, decision elements (E011 ... E014, and possibly E0111...E011X, E0131... E013Y) are added to each first decision element (E01... E04) until, from a single decision element, for example from the further decision element (E0111), all parameters necessary for executing a test program (PP) of one or more, hierarchically superordinate decision elements (E011, E01, E0) formed by the control data are present,

1.2 the test execution sequence begins with the basic decision element (E0) and is stepped on sequentially from in each case the first decision element (E01... E04) to the respective second and possibly further decision elements (E011... E014 and possibly E0111... E011X; E0131... E013Y),

1.3 a "nominal-actual value comparison" of the control data with data actually present is initiated for each type of decision element (E0; E01...; E011...; E0111...), with the result that

a) in the case of non-correspondence, the running of the test execution sequence is interrupted by means of an "abort criterion" and, for example starting from the second decision element (E011), a return is made to the next higher decision element, that is to say the first decision element (E01), or

b) in the case of correspondence, the corresponding function is executed by means of an "activity criterion" - e.g. calling a test program (PP) - or stepping on is effected by means of a "pointer criterion" to a next lower decision element, that is to say to one of the further decision elements (E0111..., E011X), or a return is made with an additional "terminate command" to the next higher decision element, the first decision element (E01),

1.4 with the execution of the test program (PP) a return is made - for example starting from the further decision element (E0111) - to the reference base of the respective next higher decision element, that is to say to the second decision element (E011).

**2.** Method according to Claim 1, characterised by the features:

2.1 each decision element (E0, E01..., E011..., E0111...) is represented by one or more function units (PCG, PCL, MEM, IP, MB or CC, SWU),

2.2 the function units (PCG, PCL, MEM, IP, MB or CC, SWU) are integral components of the communication system, which is centrally controlled by the switching computer (DP).

## Revendications

**1.** Procédé de contrôle automatique de systèmes de communication à commande centrale, notamment d'installations à postes supplémentaires, les systèmes de communication possédant au moins un calculateur de commutation possédant une partie correspondante formant mémoire, qui est subdivisée du point de vue fonctionnel pour la réception d'informations de programme et d'informations de données de commande, tandis que la commande des unités fonctionnelles, qui dépendent d'une manière hiérarchique les unes des autres par le volume de leurs données, est réalisée au moyen d'une suite de cycles de contrôle contenant les informations de programme et les informations des données de commande, caractérisé par la combinaison des caractéristiques suivantes :

1.1. la suite des cycles de contrôle est réglée de telle sorte qu'à partir d'un nombre déterminé de paramètres représentés par des données de commande est formé un élément de décision de base (E0), à la suite duquel sont tout d'abord disposés, par suite de l'adjonction respectivement d'un ou de plusieurs paramètres supplémentaires, un ou plusieurs premiers éléments de décision (E01...E04) indépendants les uns des autres et que selon une autre séquence, un ou plusieurs autres paramètres sont ajoutés au premier élément de décision (E01...E04), pour former des seconds et éventuellement d'autres éléments de décision (E011...E014, et éventuellement E0111...E011X, E0131...E013Y) jusqu'à ce que soient présents, à partir d'un élément individuel de décision, par exemple à partir de l'autre élément de décision (E0111), tous les paramètres, nécessaires pour l'exécution d'un programme de contrôle (PP), d'un ou de plusieurs éléments de décision de rang hiérarchique supérieur (E011, E01, E0), également formés par les données de commande,

1.2. la suite des cycles de contrôle commence avec l'élément de décision de base (E0) et se poursuit séquentiellement depuis le premier élément respectif de décision (E01...E04) jusqu'au second élément respectif de décision et éventuellement aux autres éléments de décision (E011...E014 et éventuellement E0111...E011X; E0131...E013Y),

1.3. pour chaque type d'élément de décision (E0;E01;...;E011; ...;E0111) une "comparaison valeur de consigne-valeur réelle" des données de commande à des données effectivement présentes est déclenchée, avec comme résultat

a) en cas de non coïncidence, l'interruption de l'exécution de la séquence de cycle de contrôle par un "critère d'interruption" et le retour, par exemple à partir du second élément de décision (E011), à l'élément de décision de rang immédiatement supérieur, c'est-à-dire au premier élément de décision (E0), ou

b) en cas de coïncidence, l'exécution de la fonction correspondante au moyen d'un "critère d'activité" -par exemple l'appel d'un programme de contrôle (PP)- ou l'avance, sous l'effet d'un "critère de renvoi", à l'élément de décision de rang immédiatement inférieur, c'est-à-dire à l'un des autres éléments de décision (E0111...,E011x), ou le retour, par une "instruction de fin" supplémentaire, à l'élément de décision de rang immédiatement supérieur, c'est-à-dire au premier élément de décision (E01),

1.4. lors de l'exécution du programme de contrôle (PP), un retour est exécuté -par exemple à partir de l'élément suivant de décision (E0111)- à la position de base de référence de l'élément de décision de rang supérieur immédiatement suivant -c'est-à-dire au second élément de décision (E011).

**2.** Procédé suivant la revendication 1, caractérisé par les caractéristiques

2.1. chaque élément de décision (E0,E01...,E011...,E0111...) est représenté par une ou plusieurs unités fonctionnelles (PCG,PCL,MEN,IP,MB ou CC,SWU),

2.2. les unités fonctionnelles (PCG,PCL,MEN,IP,MB ou CC,SWU) font partie intégrante du système de communication qui est commandé d'une manière centralisée par le calculateur de commutation (DP).

FIG 1

FIG 2